# EUROPEAN PATENT APPLICATION

(11) **EP 4 757 109 A1**
(43) Date of publication of application: **10.06.2026**
(21) Application number: 25220314.6
(22) Date of filing: 03.12.2025
(51) Int. Cl.: H02J 7/00, H01M 10/615, H01M 10/6571

(54) **BATTERY HEATING CIRCUIT, BATTERY HEATING SYSTEM, AND BATTERY ASSEMBLY**

(30) Priority: 03.12.2024 CN 202422979909 U
(71) Applicant: Anker Innovations Technology Co., Ltd., Changsha, Hunan 410221 (CN)
(72) Inventor: YU, Yue, Changsha City, 410221 (CN)
(74) Representative: Wörz, Volker Alfred

(57) **Abstract**

A battery heating circuit (410), a battery heating system (400), and a battery assembly (510) are provided. The battery heating circuit (410) included an inductor module (110), a capacitor module (120), a first switch module (130), a second switch module (140), and a battery heating module (150). A control terminal of the first switch module (130) is configured to receive a first switch control signal (S1). A control terminal of the second switch module (140) is configured to receive a second switch control signal (S2). The first switch control signal (S1) or the second switch control signal (S2) is a pulse signal. Heating input power of the battery heating module (150) is controlled through the pulse signal and energy storage in the inductor module (110) and the capacitor module (120). Therefore, a power-controllable battery heating method may be implemented.

## Description

### TECHNICAL FIELD

The present disclosure relates to the field of battery technologies, and in particular to a battery heating circuit, a battery heating system, and a battery assembly.

### BACKGROUND

With the rapid development of energy storage technology, a battery technology has also been continuously improving, thereby enabling an application of a battery increasingly widespread.

In low-temperature environments, a chemical performance of the battery may drop sharply, resulting in limited battery performance. In order to improve a comprehensive performance of the battery under a low-temperature condition, a heating film may be usually utilized to heat the battery.

However, when an outdoor energy storage device is charged by using a photovoltaic panel, there is a scenario. That is, a low-temperature, cloudy and weak sunlight condition, such as in the early morning or evening, a battery pack may need to reach a certain temperature to start charging. At this time, charging may not be started, resulting in a poor user experience.

### SUMMARY OF THE DISCLOSURE

In view of this, some embodiments of the present disclosure may provide a battery heating circuit, a battery heating system, and a battery assembly, such that it may be possible to solve a problem in the related art caused by the inability to perform normal battery heating in a scenario where power supply voltage is unstable and power is low.

According to a first aspect of the present disclosure, some embodiments of the present disclosure may provide a battery heating circuit. The battery heating circuit may include: an inductor module, a capacitor module, a first switch module, a second switch module, and a battery heating module; where a first terminal of the first switch module, a second terminal of the inductor module and a first terminal of the capacitor module may be electrically connected to each other; a second terminal of the first switch module may be electrically connected to a first terminal of the battery heating module, and a second terminal of the battery heating module may be electrically connected to a first terminal of the second switch module; a second terminal of the second switch module and a second terminal of the capacitor module may be electrically connected to a reference ground of the battery heating circuit, and a first terminal of the inductor module may be electrically connected to a power supply terminal of the battery heating circuit; a control terminal of the first switch module may be configured to receive a first switch control signal, a control terminal of the second switch module may be configured to receive a second switch control signal, the first switch control signal or the second switch control signal may be a pulse signal, and the pulse signal may be configured to control heating input power of the battery heating module.

In some embodiments, the inductor module may include: a protection component and a first inductor; a first terminal of the first inductor may be electrically connected to the power supply terminal through the protection component, and a second terminal of the first inductor, the first terminal of the first switch module and the first terminal of the capacitor module may be electrically connected to each other.

In some embodiments, the protection component may include a fuse; a first terminal of the fuse may be electrically connected to the power supply terminal, and a second terminal of the fuse may be electrically connected to the first terminal of the first inductor.

In some embodiments, the capacitor module comprises one or more capacitors.

In some embodiments, the one or more capacitors may include a first capacitor; a first terminal of the first capacitor, the first terminal of the first switch module and the second terminal of the inductor module may be electrically connected to each other, and a second terminal of the first capacitor may be electrically connected to the reference ground.

In some embodiments, the one or more capacitors comprises a plurality of capacitors, and the plurality of capacitors are connected in parallel.

In some embodiments, the first switch module may include a first switching transistor; a first terminal of the first switching transistor, the second terminal of the inductor module and the first terminal of the capacitor module may be electrically connected to each other, a second terminal of the first switching transistor may be electrically connected to the first terminal of the battery heating module, and a control terminal of the first switching transistor may be served as the control terminal of the first switch module; and the first switch control signal may be configured to control the first switching transistor.

In some embodiments, the second switch module may include a second switching transistor; a first terminal of the second switching transistor may be electrically connected to the second terminal of the battery heating module, a second terminal of the second switching transistor may be electrically connected to the reference ground, and a control terminal of the second switching transistor may be served as the control terminal of the second switch module; and the second switch control signal may be configured to control the second switching transistor.

In some embodiments, the battery heating module may include a heating film; a first terminal of the heating film may be electrically connected to the second terminal of the first switch module, and a second terminal of the heating film may be electrically connected to the first terminal of the second switch module.

In some embodiments, the battery heating circuit may further include a control module; a heating control signal terminal of the control module may be electrically connected to the control terminal of the first switch module, and the heating control signal terminal may be configured to output the first switch control signal; a power control signal terminal of the control module may be electrically connected to the control terminal of the second switch module, and the power control signal terminal may be configured to output the second switch control signal; a sampling signal terminal of the control module may be configured to be electrically connected to the power supply terminal, and the sampling signal terminal may be configured to sample electrical energy of the power supply terminal; and the control module may be configured to adjust a duty cycle of the pulse signal according to the electrical energy of the power supply terminal.

In some embodiments, the pulse signal is a pulse square wave signal which is output according to power supply energy.

In some embodiments, in a case where the pulse square wave signal is configured to control a working state of the second switch module to be the closed and conducting state, the second switch module is turned on, and a power supply loop is formed by the power supply terminal, the inductor module, the first switch module, the battery heating module, the second switch module, and the reference ground. In some embodiments, in a case where the pulse square wave signal is configured to control a working state of the second switch module to be an open and disconnected state, the second switch module is disconnected, and no power supply loop is formed.

In some embodiments, in a case where the pulse square wave signal is configured to control a working state of the first switch module to be the closed and conducting state, the first switch module is turned on, and a power supply loop is formed by the power supply terminal, the inductor module, the first switch module, the battery heating module, the second switch module, and the reference ground. In some embodiments, in a case where the pulse square wave signal is configured to control a working state of the first switch module to be an open and disconnected state, the first switch module is disconnected, and no power supply loop is formed.

According to a second aspect of the present disclosure, some embodiments of the present disclosure may provide a battery heating system, including the battery heating circuit according to any one of the first aspect of the present disclosure.

According to a third aspect of the present disclosure, some embodiments of the present disclosure may provide a battery assembly, which may include the battery heating system according to the second aspect of the present disclosure.

In the battery heating circuit, the battery heating system, and the battery assembly provided by the embodiments of the present disclosure, the battery heating circuit may include an inductor module, a capacitor module, a first switch module, a second switch module, and a battery heating module. A first terminal of the first switch module, a second terminal of the inductor module and a first terminal of the capacitor module may be electrically connected to each other. A second terminal of the first switch module may be electrically connected to a first terminal of the battery heating module. A second terminal of the battery heating module may be electrically connected to a first terminal of the second switch module. A second terminal of the second switch module and a second terminal of the capacitor module may be electrically connected to a reference ground of the battery heating circuit. A first terminal of the inductor module may be electrically connected to a power supply terminal of the battery heating circuit. A control terminal of the first switch module may be configured to receive a first switch control signal, such that it may be possible to control the first switch module through the first switch control signal. A control terminal of the second switch module may be configured to receive a second switch control signal, such that it may be possible to control the second switch module through the second switch control signal. The first switch control signal or the second switch control signal may be a pulse signal. Heating input power of the battery heating module may be controlled through the pulse signal and energy storage in the inductor module and the capacitor module, such that the power-controllable battery heating method may be implemented. Therefore, it may be possible to solve a problem of poor user experience in the related art caused by the inability to perform battery heating in a specific scenario, such that the reliability of the battery product may be effectively improved, thereby improving the user satisfaction.

### BRIEF DESCRIPTION OF THE DRAWINGS

The accompanying drawings, which are incorporated in and constitute a part of this specification, illustrate embodiments consistent with the present disclosure, and together with the description, serve to explain the principles of the present disclosure.

To describe the technical solutions in the embodiments of the present disclosure or in the related art more clearly, the following briefly describes the accompanying drawings required for describing the embodiments or the related art. Apparently, the accompanying drawings in the following description show merely some of the embodiments of this application, and those skilled in the art may still obtain other drawings from these accompanying drawings without creative efforts.

One or more embodiments are used as examples for description by using figures in corresponding accompanying drawings. These example descriptions impose no limitation on the embodiments. Elements with a same reference sign in the accompanying drawings represent similar elements. Unless otherwise stated, the figures in the accompanying drawings impose no limitation on a scale.
FIG. 1 is a schematic structural diagram of a battery heating circuit according to some embodiments of the present disclosure.
FIG. 2 is a schematic structural diagram of the battery heating circuit according to some embodiments of the present disclosure.
FIG. 3 is a schematic circuit principle diagram of the battery heating circuit according to some embodiments of the present disclosure.
FIG. 4 is a schematic structural diagram of a battery heating system according to some embodiments of the present disclosure.
FIG. 5 is a schematic structural diagram of a battery assembly according to some embodiments of the present disclosure.

### DETAILED DESCRIPTION

To make the objectives, technical solutions, and advantages of the present disclosure clearer, the following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by those skilled in the art based on the embodiments of the present disclosure without creative efforts fall within the scope of protection of the present disclosure.

The following provides several different embodiments or examples of different implementations of the present disclosure. To simplify contents of the present disclosure, configurations and arrangements in specific examples are described below, and they are merely illustrative and are not intended to limit the present disclosure. Moreover, reference numerals and/or characters may repeat in the various examples for the purpose of simplicity and clarity, and the repetition does not dictate a relation between the various embodiments and/or configurations discussed.

Some embodiments of the present disclosure may provide a battery heating circuit, a battery heating system, and a battery assembly, such that it may be possible to solve a problem in the related art caused by the inability to perform normal battery heating by utilizing a heating device in a scenario where a power supply may provide an unstable voltage and a low power. The battery heating circuit may include an inductor module, a capacitor module, a first switch module, a second switch module, and a battery heating module. The first switch module may be controlled by a first switch control signal. The second switch module may be controlled by a second switch control signal. In addition, the first switch control signal or the second switch control signal may be a pulse signal, such that heating input power of the battery heating module may be controlled through the pulse signal and energy storage in the inductor module and the capacitor module, thereby implementing a power-controllable battery heating method.

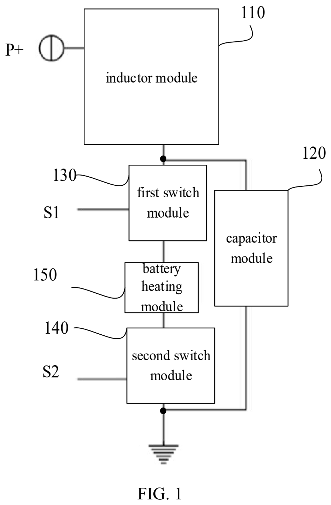

FIG. 1 is a schematic structural diagram of a battery heating circuit according to some embodiments of the present disclosure. In some embodiments, as shown in FIG. 1, the battery heating circuit provided by some embodiments of the present disclosure may include an inductor module 110, a capacitor module 120, a first switch module 130, a second switch module 140, and a battery heating module 150. A first terminal of the first switch module 130, a second terminal of the inductor module 110 and a first terminal of the capacitor module 120 may be electrically connected to each other. A second terminal of the first switch module 130 may be electrically connected to a first terminal of the battery heating module 150. A second terminal of the battery heating module 150 may be electrically connected to a first terminal of the second switch module 140. A second terminal of the second switch module 140 and a second terminal of the capacitor module 120 may be electrically connected to a reference ground of the battery heating circuit. A first terminal of the inductor module 110 may be electrically connected to a power supply terminal P+ of the battery heating circuit. A control terminal of the first switch module 130 may be configured to receive a first switch control signal S1, such that the first switch module 130 may be controlled through the first switch control signal S1. A control terminal of the second switch module 140 may be configured to receive a second switch control signal S2, such that the second switch module 140 may be controlled through the second switch control signal S2. The first switch control signal S1 or the second switch control signal S2 may be a pulse signal. Heating input power of the battery heating module 150 may be controlled through the pulse signal and energy storage in the inductor module 110 and the capacitor module 120, such that a power-controllable battery heating method may be implemented.

In the embodiments of the present disclosure, the pulse signal may be configured to control the heating input power of the battery heating module 150. In some embodiments, the pulse signal may be a pulse square wave signal which may be output according to power supply energy. The pulse square wave signal may be served as a power control signal. A duty cycle of the power control signal may be adjusted according to amount of the power source energy. In some embodiments, in a case where the power supply energy is a charging power provided by a photovoltaic panel, the duty cycle of a square wave signal with a fixed frequency may be adjusted according to an intensity of a photovoltaic energy, such that the adjusted pulse signal may be served as the power control signal and transmitted to the control terminal of the first switch module 130 or the control terminal of the second switch module. In this way, the first switch module 130 or the second switch module 140 may be controlled to be turned on/turned off through the pulse signal, such that the purpose of controlling the heating input power may be achieved through continuous turning on/ turning off. Therefore, it may be possible to solve a problem in the related art caused by the inability to perform the battery heating in the scenario where the power supply voltage is unstable and the power is low, such that the reliability of a battery product may be effectively improved, thereby improving the user experience.

It can be seen that in the battery heating circuit provided by the embodiments of the present disclosure, the first terminal of the first switch module 130, the second terminal of the inductor module 110 and the first terminal of the capacitor module 120 may be electrically connected to each other, the second terminal of the first switch module 130 may be electrically connected to the first terminal of the battery heating module 150, and the second terminal of the battery heating module 150 may be electrically connected to the first terminal of the second switch module 140. The second terminal of the second switch module 140 and the second terminal of the capacitor module 120 may be electrically connected to the reference ground of the battery heating circuit. The first terminal of the inductor module 110 may be electrically connected to the power supply terminal P+ of the battery heating circuit. The first switch module 130 may be controlled by the first switch control signal S1, and the second switch module 140 may be controlled by the second switch control signal S2. The first switch control signal S1 or the second switch control signal S2 may be the pulse signal. In this way, the heating input power of the battery heating module 150 may be controlled through the pulse signal and the energy storage in the inductor module 110 and the capacitor module 120, such that the power-controllable battery heating method may be implemented. Therefore, it may be possible to solve a problem of poor user experience in the related art caused by the inability to perform battery heating in a specific scenario, such that the reliability of the battery product may be effectively improved, thereby improving the user satisfaction.

In some embodiments, the power supply terminal P+ of the battery heating circuit may be electrically connected to a power supply interface of a battery pack. The reference ground of the battery heating circuit may be electrically connected to a discharge interface P- of the battery pack. In some embodiments, the power supply terminal P+ may be a power supply terminal of the photovoltaic panel, such that the photovoltaic panel may be served as a power supply, thereby utilizing an electric energy provided by the photovoltaic panel to charge the battery.

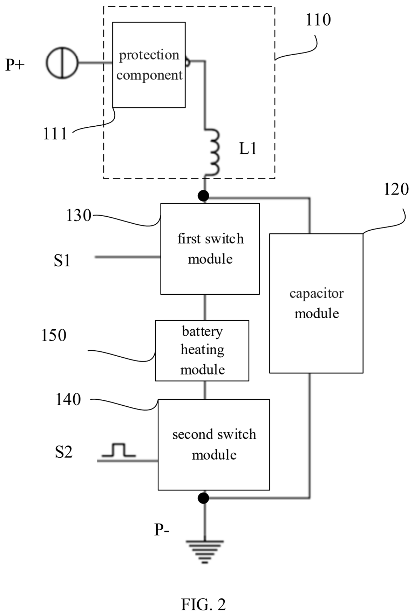

In some embodiments, when battery heating is started, a microcontroller unit (MCU) may send a continuous high-level signal as the first switch control signal S1, which may be transmitted to the control terminal of the first switch module 130, such that it may be possible to control the first switch module 130 to enter a closed and conducting state through the first switch control signal S1. In addition, the MCU may send a pulse square wave signal with a fixed frequency and a fixed duty cycle as the second switch control signal S2, which may be transmitted to the control terminal of the second switch module 140, as shown in FIG. 2, such that it may be possible to control a working state of the second switch module 140 through the pulse square wave signal. In a case where the pulse square wave signal is configured to control the working state of the second switch module 140 to be the closed and conducting state, the second switch module 140 may be turned on or connected. At this time, a power supply loop may be formed by the power supply terminal P+ of the battery heating circuit, the inductor module 110, the first switch module 130, the battery heating module 150, the second switch module 140, and the reference ground of the battery heating circuit. The battery heating module 150 may work normally to heat the battery. At the same time, the electrical energy provided by the power supply terminal P+ may be utilized/configured to charge the capacitor module 120. In a case where the pulse square wave signal is configured to control the working state of the second switch module 140 to be an open and disconnected state, the second switch module 140 may be disconnected. At this time, no power supply loop is formed. The battery heating module 150 may stop heating, that is, the battery heating module 150 does not work. In this way, the second switch module 140 may be continuously turned on and turned off through the pulse square wave signal and the energy storage in the inductor module 110 and the capacitor module 120, such that power control may be achieved, thereby implementing the power-controllable battery heating method. Therefore, it may be possible to solve a problem of poor user experience in the related art caused by the inability to perform battery heating in the specific scenario, such that the reliability of the battery product may be effectively improved, thereby improving the user satisfaction.

Of course, in addition to a case where the pulse square wave signal may be served as the second switch control signal S2 to implement the power control method through the second switch module 140, the embodiments of the present disclosure may also adopt other methods to implement power control. In some embodiments, the pulse square wave signal may be served as the first control signal to implement the power control through the first switch module 130, which is not limited herein.

As an example of the present disclosure, in a case where the power control is implemented through the first switch module 130, when the battery heating is started, the MCU may send the continuous high-level signal as the second switch control signal S2, which may be transmitted to the control terminal of the second switch module 140, such that it may be possible to control the second switch module 140 to enter the closed and conducting state through the second switch control signal S2. In addition, the MCU may send the pulse square wave signal with the fixed frequency and the fixed duty cycle as the first switch control signal S1, which may be transmitted to the control terminal of the first switch module 130, such that it may be possible to control the working state of the first switch module 130 through the pulse square wave signal. In a case where the pulse square wave signal is configured to control the working state of the first switch module 130 to be the closed and conducting state, the first switch module 130 may be turned on or connected. At this time, a power supply loop may be formed by the power supply terminal P+ of the battery heating circuit, the inductor module 110, the first switch module 130, the battery heating module 150, the second switch module 140, and the reference ground of the battery heating circuit. The battery heating module 150 may work normally to heat the battery. At the same time, the electrical energy provided by the power supply terminal P+ may be utilized to charge the capacitor module 120. In a case where the pulse square wave signal is configured to control the working state of the first switch module 130 to be the open and disconnected state, the first switch module 130 may be disconnected. At this time, no power supply loop is formed. The battery heating module 150 may stop heating, that is, the battery heating module 150 does not work. In this way, the first switch module 130 may be continuously turned on and turned off through the pulse square wave signal and the energy storage in the inductor module 110 and the capacitor module 120, such that the power control may be achieved, thereby implementing the power-controllable battery heating method. Therefore, it may be possible to solve a problem of poor user experience in the related art caused by the inability to perform battery heating in the specific scenario, such that the reliability of the battery product may be effectively improved, thereby improving the user satisfaction.

In some embodiments of the present disclosure, the inductor module 110 may include a protection component 111 and a first inductor L1, as shown in FIG. 2. A first terminal of the first inductor L1 may be electrically connected to the power supply terminal P+ through the protection component 111. A second terminal of the first inductor L1, the first terminal of the first switch module 130 and the first terminal of the capacitor module 120 may be electrically connected to each other. Therefore, the protection component 111 may be configured to prevent a problem such as fire and explosion, etc., caused by a short circuit, thereby implementing current protection. The protection component 111 may include, but is not limited to, a fuse. The protection component 111 may also be other components with a protective function, which is not limited herein.

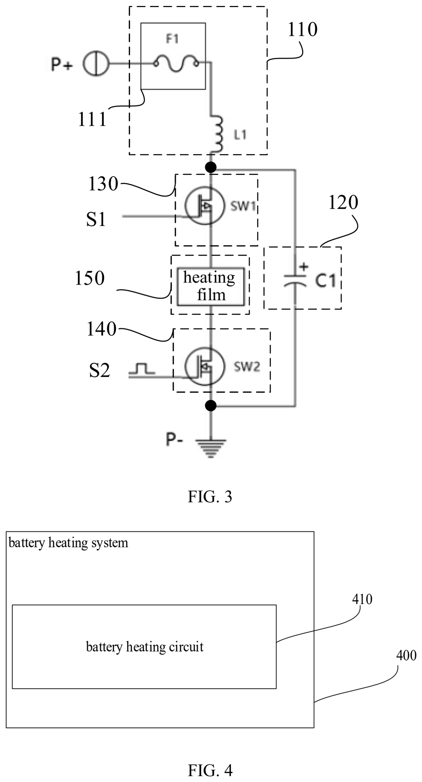

In some embodiments, as shown in FIG. 3, in a case where the protection component may include a fuse F1, a first terminal of the fuse F1 may be electrically connected to the power supply terminal P+, and a second terminal of the fuse F1 may be electrically connected to the first terminal of the first inductor L1. Therefore, the fuse F1 may be configured to implement short-circuit protection, such that it may be possible to further effectively prevent a risk of fire and explosion caused by the short circuit.

In the embodiments of the present disclosure, the capacitor module 120 may be configured to filter out a ripple current in the circuit and implement a filtering and voltage stabilizing effect. In some embodiments of the present disclosure, the capacitor module 120 may include one or more capacitors. As shown in FIG. 3, taking one capacitor as an example, a first terminal of the first capacitor C1, the first terminal of the first switch module 130 and the second terminal of the inductor module 110 may be electrically connected to each other. A second terminal of the first capacitor C1 may be electrically connected to the reference ground. When the capacitor module 120 may include multiple capacitors, the multiple capacitors may be connected in parallel. Therefore, the battery heating circuit may filter out the ripple current through the first capacitor C1, thereby implementing the filtering and voltage stabilizing function. The inductor module 110 may include the first inductor L1, such that it may be possible to implement the filtering and voltage stabilization through the first inductor L1.

In some embodiments, one or more switching components may be utilized to implement a function of the first switch module 130 in the embodiments of the present disclosure. In some embodiments of the present disclosure, the function of the first switch module 130 may be implemented through one switching device, which is not limited herein.

In some embodiments of the present disclosure, the first switch module 130 may include a first switching transistor SW1. A first terminal of the first switching transistor SW1, the second terminal of the inductor module 110 and the first terminal of the capacitor module 120 may be electrically connected to each other. A second terminal of the first switching transistor SW1 may be electrically connected to the first terminal of the battery heating module 150. A control terminal of the first switching transistor SW1 may be served as the control terminal of the first switch module 130. Therefore, the first switching transistor SW1 may be controlled through the first switch control signal S1. In some embodiments, in a case where the first switch control signal S1 is a normally open or normally closed signal sent by the MCU, the first switching transistor SW1 may be controlled to be normally closed through the first switch control signal S1, such that the first switching transistor SW1 may be in the closed and conducting state. In this way, the electrical energy provided by the power supply terminal P+ may be transmitted to the battery heating module 150 through the conducting first switching transistor SW1, such that it may be possible to supply power to the battery heating module 150, thereby ensuring that the battery heating module 150 may be capable of working normally.

In some embodiments, one or more second switching transistors SW2 may be configured to implement a function of the second switch module 140 in the embodiments of the present disclosure. In some embodiments of the present disclosure, the function of the first switch module 130 may be implemented through one second switch, which is not limited herein.

In some embodiments of the present disclosure, the second switch module 140 may include a second switching transistor SW2. A first terminal of the second switching transistor SW2 may be electrically connected to the second terminal of the battery heating module 150. A second terminal of the second switching transistor SW2 may be electrically connected to the reference ground. A control terminal of the second switching transistor SW2 may be served as the control terminal of the second switch module 140. Therefore, the second switching transistor SW2 may be controlled through the second switch control signal S2. In some embodiments, in a case where the second switch control signal S2 is the pulse square wave signal sent by the MCU, the second switching transistor SW2 may be controlled to be turned on or turned off through the pulse square wave signal, such that the second switching transistor SW2 may be continuously turned on and turned off according to the pulse square wave signal, thereby achieving the power control. Therefore, the heating input power may be controlled, such that it may be possible to solve a problem of an existing battery heating technology when used in a nighttime scenario, and energy may be reasonably allocated, thereby improving product reliability and customer satisfaction.

In some embodiments of the present disclosure, a heating film of the battery may be served as the battery heating module 150, such that it may be possible to implement the heating function of the battery heating module 150 through the heating film. In some embodiments of the present disclosure, the battery heating module 150 may include a heating film. A first terminal of the heating film may be electrically connected to the second terminal of the first switch module 130. A second terminal of the heating film may be electrically connected to the first terminal of the second switch module 140. Therefore, the battery heating circuit may heat the battery through the heating film, thereby implementing the battery heating function.

In addition, in the embodiments of the present disclosure, each of the first switching transistor SW1 and the second switching transistor SW2 may be implemented by a metal-oxide-semiconductor field-effect transistor (MOSFET). Alternatively, each of the first switching transistor SW1 and the second switching transistor SW2 may be implemented by an electronic switching component, such as a triode, a relay, or the like, which is not limited herein.

Of course, in addition to the inductor module 110, the capacitor module 120, the first switch module 130, the second switch module 140, and the battery heating module 150, the battery heating circuit provided by the embodiments of the present disclosure may further include other functional modules, such as a control module, a battery, and so on, which is not limited herein.

In some embodiments, the battery heating circuit provided by the embodiments of the present disclosure may further include a control module (not shown). The control module may be configured to adjust the duty cycle of the pulse signal according to the energy of the power supply terminal P+, such that it may be possible to implement the power control by adjusting the duty cycle of the pulse signal. In some embodiments, a sampling signal terminal of the control module may be electrically connected to the power supply terminal P+, such that it may be possible to sample the electrical energy of the power supply terminal P+ through the sampling signal terminal. A heating control signal terminal of the control module may be electrically connected to the control terminal of the first switch module 130. A power control signal terminal of the control module may be electrically connected to the control terminal of the second switch module 140. The heating control signal terminal may be configured to output the first switch control signal S1. The power control signal terminal may be configured to output the pulse signal, such that the pulse signal may be served as the second switch control signal S2 and transmitted to the second switch module 140. That is, the power control signal terminal may be configured to output the second switch control signal S2, such that the duty cycle of the pulse signal may be adjusted by the control module according to the electrical energy of the power supply terminal P+. In addition, the working state of the second switch module 140 may be controlled according to the pulse signal and the energy storage in the inductor module 110 and the capacitor module 120, such that the power control may be implemented. The control module may be configured to adjust the duty cycle of the pulse signal according to the electrical energy of the power supply terminal P+ and control the working state of the second switch module 140 according to the pulse signal.

In some embodiments, the power supply energy in the embodiments of the present disclosure may be the energy provided by the power supply terminal P+. The control module may be configured to adjust the duty cycle of the pulse signal according to the power supply energy. Based on the adjusted duty cycle, the pulse signal may be output at a preset fixed frequency as the first switch control signal S1 or the second switch control signal S2, such that the heating input power may be controlled through the first switching transistor or the second switching transistor.

In some embodiments, in a case where each of the first switch module 130 and the second switch module 140 is implemented by one switching device, as shown in FIG. 3, when the battery heating is started, the control module may send a continuous high-level signal as the first switch control signal S1, which may be transmitted to the control terminal of the first switching transistor SW1, such that it may be possible to control the first switching transistor SW1 to be normally closed through the first switch control signal S1. In addition, the control module may send the pulse signal with the fixed frequency and the fixed duty cycle as the second switch control signal S2, which may be transmitted to the control terminal of the second switching transistor SW2, such that it may be possible to control the second switching transistor SW2 to be tuned on or turned off through the pulse signal. When the second switching transistor SW2 is turned on, that is, in a case where the second switching transistor SW2 is closed and conducting, a power supply loop may be formed by the power supply terminal P+ of the battery heating circuit, the first inductor L1, the first switching transistor SW1, the heating film, the second switching transistor SW2, and the reference ground of the battery heating circuit. The heating film may work normally to heat the battery. At the same time, the electrical energy provided by the power supply terminal P+ may be utilized to charge the first capacitor C1. When the second switching transistor SW2 is turned off, that is, in a case where the second switching transistor SW2 is open and disconnected, no power supply loop is formed, and the heating film does not work. In this way, the second switching transistor SW2 may be continuously turned on and turned off through the pulse signal, such that the power control may be achieved, thereby implementing the power-controllable battery heating method. Therefore, it may be possible to solve a problem of poor user experience in the related art caused by the inability to perform battery heating in the specific scenario.

In some embodiments, the battery heating circuit provided by the embodiments of the present disclosure may be applied to a battery heating system, such that in the battery heating system, the first switch module 130 may be controlled through the first switch control signal S1, and the second switch module 140 may be controlled through the second switch control signal S2. The first switch control signal S1 or the second switch control signal S2 may be the pulse signal. The heating input power may be controlled through the pulse signal and energy storage in the first inductor L1 and the first capacitor C1, thereby implementing the power-controllable battery heating method. Therefore, it may be possible to solve the problem that normal battery heating cannot be performed in a scenario where the voltage of the power supply is unstable and the power is low in the related art.

As shown in FIG. 4, the embodiment of the present disclosure provides a battery heating system 400. The battery heating system may include a battery heating circuit 410, and the battery heating circuit 410 may be the battery heating circuit according to any one of the above embodiments of the present disclosure. In the battery heating system 400, the heating input power may be controlled through the pulse signal and the energy storage in the inductor module 110 and the capacitor module 120, thereby implementing the power-controllable battery heating method. Therefore, it may be possible to solve the problem in the related art caused by the inability to perform the battery heating in the scenario where the power supply voltage is unstable and the power is low, such that the reliability of the battery product may be effectively improved, thereby improving the user experience.

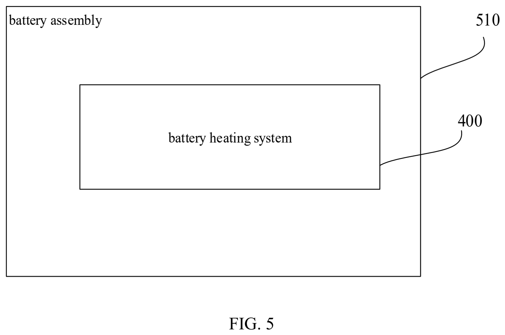

As shown in FIG. 5, some embodiments of the present disclosure may further provide a battery assembly 510. The battery assembly 510 may include the battery heating system 400 according to any one of the above embodiments. Therefore, in the battery assembly 510, the first switch module 130 may be controlled through the first switch control signal S1, and the second switch module 140 may be controlled through the second switch control signal S2. The first switch control signal S1 or the second switch control signal S2 may be the pulse signal. The heating input power of the battery heating module 150 may be controlled through the pulse signal and the energy storage in the inductor module 110 and the capacitor module 120, thereby implementing the power-controllable battery heating method. Therefore, it may be possible to solve the problem in the related art caused by the inability to perform the battery heating in the scenario where the power supply voltage is unstable and the power is low, such that the reliability of the battery product may be effectively improved, thereby improving the user experience.

The system and battery assembly embodiments described above are only schematic. The units described as separate components may be or may not be physically separated. The components displayed as units may be or may not be physical units, i.e., may be located in one place, or may be distributed on multiple network units. Some or all of the modules may be selected according to actual needs to achieve the objectives of the solution of the embodiments.

Based on the foregoing descriptions of the implementations, those skilled in the art may clearly understand that each implementation may be implemented by software in addition to a general hardware platform, and of course, may also be implemented by hardware.

Based on such an understanding, the foregoing technical solutions essentially or the part contributing to the related art may be implemented in a form of a software product. The computer software product may be stored in a computer-readable storage medium, such as a ROM/RAM, a magnetic disk, or an optical disc, and may include several instructions for instructing a computer device (which may be a personal computer, a server, a network device, or the like) to perform the methods described in the embodiments or some parts of the embodiments.

It should be understood that the terms used herein is for the purpose of describing particular exemplary implementations only and is not intended to be limiting. As used herein, the singular forms ""a", "an", and "the" may be intended to include the plural forms as well, unless the context clearly indicates otherwise. The terms "include", "comprise", "contain", and "have" are inclusive, and thus specify the presence of stated features, steps, operations, elements, and/or components, but do not preclude the presence or addition of one or more other features, steps, operations, elements, components, and/or combinations thereof. The method steps, processes, and operations described herein are not to be construed as necessarily requiring their performance in the particular order described or illustrated, unless the order of execution is explicitly stated. It is also to be understood that additional or alternative steps may be employed.

The above are merely some embodiments of the present disclosure, such that those skilled in the art can understand or implement the present disclosure. Various modifications to these embodiments are apparent to those skilled in the art, and the generic principles defined herein may be implemented in other embodiments without departing from the spirit or scope of the present disclosure. Therefore, the present disclosure is not intended to be limited to the embodiments herein, but is to be accorded the widest scope consistent with the principles and novel features claimed herein.

## Claims

1. A battery heating circuit (410), **characterized by** comprising: an inductor module (110), a capacitor module (120), a first switch module (130), a second switch module (140), and a battery heating module (150);
wherein a first terminal of the first switch module (130), a second terminal of the inductor module (110) and a first terminal of the capacitor module (120) are electrically connected to each other;
a second terminal of the first switch module (130) is electrically connected to a first terminal of the battery heating module (150), and a second terminal of the battery heating module (150) is electrically connected to a first terminal of the second switch module (140);
a second terminal of the second switch module (140) and a second terminal of the capacitor module (120) are electrically connected to a reference ground of the battery heating circuit (410), and a first terminal of the inductor module (110) is electrically connected to a power supply terminal (P+) of the battery heating circuit (410);
a control terminal of the first switch module (130) is configured to receive a first switch control signal (S1), a control terminal of the second switch module (140) is configured to receive a second switch control signal (S2), the first switch control signal (S1) or the second switch control signal (S2) is a pulse signal, and the pulse signal is configured to control heating input power of the battery heating module (150).

2. The battery heating circuit (410) as claimed in claim 1, wherein the inductor module (110) comprises: a protection component (111) and a first inductor (L1);
a first terminal of the first inductor (L1) is electrically connected to the power supply terminal (P+) through the protection component (111), and a second terminal of the first inductor (L1), the first terminal of the first switch module (130) and the first terminal of the capacitor module (120) are electrically connected to each other.

3. The battery heating circuit (410) as claimed in claim 2, wherein the protection component (111) comprises a fuse (F1);
a first terminal of the fuse (F1) is electrically connected to the power supply terminal, and a second terminal of the fuse (F1) is electrically connected to the first terminal of the first inductor (L1).

4. The battery heating circuit (410) as claimed in claim 1, wherein the capacitor module (120) comprises one or more capacitors.

5. The battery heating circuit (410) as claimed in claim 4, wherein the one or more capacitors comprises a first capacitor (C1);
a first terminal of the first capacitor (C1), the first terminal of the first switch module (130) and the second terminal of the inductor module (110) are electrically connected to each other, and a second terminal of the first capacitor (C1) is electrically connected to the reference ground.

6. The battery heating circuit (410) as claimed in claim 4, wherein the one or more capacitors comprises a plurality of capacitors, and the plurality of capacitors are connected in parallel.

7. The battery heating circuit (410) as claimed in claim 1, wherein the first switch module (130) comprises a first switching transistor (SW1);
a first terminal of the first switching transistor (SW1), the second terminal of the inductor module (110) and the first terminal of the capacitor module (120) are electrically connected to each other, a second terminal of the first switching transistor (SW1) is electrically connected to the first terminal of the battery heating module (150), and a control terminal of the first switching transistor (SW1) is served as the control terminal of the first switch module (130); and
the first switch control signal (S1) is configured to control the first switching transistor (SW1).

8. The battery heating circuit (410) as claimed in claim 1, wherein the second switch module (140) comprises a second switching transistor (SW2);
a first terminal of the second switching transistor (SW2) is electrically connected to the second terminal of the battery heating module (150), a second terminal of the second switching transistor (SW2) is electrically connected to the reference ground, and a control terminal of the second switching transistor (SW2) is served as the control terminal of the second switch module (140); and
the second switch control signal (S2) is configured to control the second switching transistor (SW2).

9. The battery heating circuit (410) as claimed in claim 1, wherein the battery heating module (150) comprises a heating film;
a first terminal of the heating film is electrically connected to the second terminal of the first switch module (130), and a second terminal of the heating film is electrically connected to the first terminal of the second switch module (140).

10. The battery heating circuit (410) as claimed in any one of claims 1 to 7, further comprising a control module;
a heating control signal terminal of the control module is electrically connected to the control terminal of the first switch module (130), and the heating control signal terminal is configured to output the first switch control signal (S1);
a power control signal terminal of the control module is electrically connected to the control terminal of the second switch module (140), and the power control signal terminal is configured to output the second switch control signal (S2);
a sampling signal terminal of the control module is configured to be electrically connected to the power supply terminal, and the sampling signal terminal is configured to sample electrical energy of the power supply terminal; and
the control module is configured to adjust a duty cycle of the pulse signal according to the electrical energy of the power supply terminal.

11. The battery heating circuit (410) as claimed in claim 1, wherein the pulse signal is a pulse square wave signal which is output according to power supply energy.

12. The battery heating circuit (410) as claimed in claim 11, wherein in a case where the pulse square wave signal is configured to control a working state of the second switch module (140) to be the closed and conducting state, the second switch module (140) is turned on, and a power supply loop is formed by the power supply terminal, the inductor module (110), the first switch module (130), the battery heating module (150), the second switch module (140), and the reference ground; and/or
wherein in a case where the pulse square wave signal is configured to control a working state of the second switch module (140) to be an open and disconnected state, the second switch module (140) is disconnected, and no power supply loop is formed.

13. The battery heating circuit (410) as claimed in claim 11, wherein in a case where the pulse square wave signal is configured to control a working state of the first switch module (130) to be the closed and conducting state, the first switch module (130) is turned on, and a power supply loop is formed by the power supply terminal, the inductor module (110), the first switch module (130), the battery heating module (150), the second switch module (140), and the reference ground; and/or
wherein in a case where the pulse square wave signal is configured to control a working state of the first switch module (130) to be an open and disconnected state, the first switch module (130) is disconnected, and no power supply loop is formed.

14. A battery heating system (400), **characterized by** comprising the battery heating circuit (410) as claimed in any one of claims 1 to 13.

15. A battery assembly (510), **characterized by** comprising the battery heating system (400) as claimed in claim 14.
